# FASCICULE DE BREVET EUROPEEN

(11) **EP 3 642 926 B1**
(45) Date de publication et mention de la délivrance du brevet: **11.08.2021**
(21) Numéro de dépôt: 18730402.7
(22) Date de dépôt: 19.06.2018
(51) Int. Cl.: B64D 11/00, B64D 41/00, H02J 3/38, H02J 3/46, H02J 5/00

(54) **PROCÉDÉ ET ARCHITECTURE D'ALIMENTATION ÉLECTRIQUE DE RÉSEAU DOMESTIQUE EMBARQUÉ**
VERFAHREN ZUR STROMVERSORGUNG EINES HAUSHALTSÜBLICHEN BORDNETZES, UND ENTSPRECHENDE STROMVERSORGUNGSVORRICHTUNG
METHOD FOR SUPPLYING AN ON-BOARD DOMESTIC POWER NETWORK, AND CORRESPONDING POWER SUPPLY ARCHITECTURE

(30) Priorité: 20.06.2017 FR 1755597
(43) Date de publication de la demande: 29.04.2020
(73) Titulaire: Latelec, 31670 Labege Occitanie (FR)
(72) Inventeur: BERENGER, Serge, 75009 Paris (FR); LEMIRE, Grégoire, 31500 Toulouse Occitanie (FR); REBIÈRE, Yoann, 31500 Ramonville Occitanie (FR)
(74) Mandataire: Junca, Eric
(86) Numéro de dépôt international: PCT/EP2018/066302
(87) Numéro de publication internationale: WO 2018/234330

(56) Documents cités:
- EP-A1- 2 942 696
- WO-A1-2016/016041
- DE-A1-102011 121 787
- DE-A1-102014 219 788
- DE-B- 1 161 990
- FR-A1- 3 000 468
- FR-A1- 3 001 443
- US-A1- 2011 210 606
- US-A1- 2017 126 018

## Description

### DOMAINE TECHNIQUE

L'invention se rapporte à un procédé et une architecture d'alimentation électrique d'un réseau domestique embarqué dans une cabine passagers pour des équipements électroniques nécessitant des niveaux de tension similaires à ceux de type domestique terrestre. Ce procédé et cette architecture sont mis en œuvre pour distribuer en particulier la puissance embarquée dans les cabines passagers d'aéronefs à partir de puissances électriques fournies par des génératrices, chaque génératrice étant couplée à un moteur de propulsion. L'invention concerne également un aéronef équipé d'une telle architecture, en particulier des avions commerciaux de génération électrique conventionnelle actuellement exploités ou de génération future.

Le domaine de l'invention concerne l'alimentation électrique domestique dans les réseaux électriques embarquée, et plus particulièrement l'alimentation domestique dans les cabines d'aéronefs. L'invention s'applique également aux systèmes électriques embarqués dans tout type de véhicule de transport, aussi bien les véhicules automobiles, le transport ferroviaire ou maritime.

Les charges domestiques du système cabine se rapportent aux charges des équipements non critiques pour la gestion du transport. Dans cette catégorie, on peut citer les charges des équipements électroniques personnels grand public détenus par les passagers, le système de divertissement passagers ou IFE (anagramme de « In FLight Entertainment »), et les équipements de confort (éclairage individuel, ventilation, installations de cuisson ou « galleys », etc.). L'alimentation de ces charges s'effectue sous deux formes : des tensions alternatives de 230 V à 50 Hz, qui est la distribution répandue en Europe, ou de 120 V à 60 Hz pour la distribution standard aux USA pour les équipements électroniques personnels et des tensions alternative 115 V à 400Hz et continue 28 V de type aéronautique pour le système IFE et les équipements de confort.

Pour alimenter les charges des équipements domestiques, les réseaux électriques des systèmes embarqués distribuent alors à travers des convertisseurs de type courants continu/alternatif (DC/AC) ou alternatif/alternatif (AC/AC) afin de créer localement des niveaux de tension adaptés aux équipements domestiques.

Dans l'application avionique en particulier, des réseaux de distribution électriques alimentent les équipements techniques des systèmes avioniques critiques pour la gestion du vol (les actionneurs du train d'atterrissage, les compresseurs du système de conditionnement d'air, les pompes des circuits hydrauliques du système de pressurisation, etc.) ainsi que les équipements dits domestiques (système IFE et équipements de confort) du système cabine, non critiques pour cette gestion et qui ont été évoqués ci-dessus.

A la source, les génératrices des aéronefs - entraînés par les moteurs de propulsion de chaque aile de l'aéronef - fournissent classiquement des courants (AC) de tensions régulées triphasées de 115 et 230 volts à des fréquences de 400 Hz ou à des fréquences dans la gamme 360 - 800 Hz, et une tension de 28 volts de courant continu (DC) via des redresseurs. La puissance électrique est alors distribuée à partir de cœurs électriques sur des barres de bus de réseaux de distribution primaires formant le réseau avionique puis redistribuée sur les systèmes avion, à partir de boitiers électriques secondaires, dans des réseaux de distribution secondaires constitués de barres-bus, de câbles et de harnais. Les équipements techniques des systèmes avion - répartis sur les différents barres-bus en fonction de leur localisation et de leur charge - sont dimensionnés aux niveaux de tension et de fréquence fournis par les réseaux secondaires.

Dans cette application avionique, l'alimentation de charges d'équipements de type domestique est réalisée localement à partir des réseaux de distribution secondaires par des convertisseurs DC/AC ou AC/AC nécessitant des composants intermédiaires de redimensionnement de l'électronique de puissance (onduleurs, convertisseurs, transformateurs, etc.).

### ÉTAT DE LA TECHNIQUE

Il est connu de gérer l'alimentation des charges de forte puissance, des charges techniques par un seul et même réseau de distribution électrique primaire et secondaire. Cette gestion est par exemple illustrée dans le document de brevet EP 2 432 093, qui préconise l'utilisation d'une seule barre-bus de distribution de puissance primaire couplé à un convertisseur secondaire intégré dans chaque cœur secondaire pour fournir la tension adaptée aux équipements des systèmes avion reliés à ce cœur secondaire. Par ailleurs, les documents de brevet FR 3 005 377 ou US 7 950 606 prévoient de multiplier les cœurs secondaires afin de les localiser au plus près des charges à alimenter. Ces solutions ne permettent pas d'améliorer l'adaptation de l'alimentation des équipements domestiques. Le document de brevet EP 2 942 696 A1 enseigne un système de gestion et de distribution de puissance à des équipements passagers embarqués dans une cabine d'un aéronef.

De plus, la multiplication des conversions au niveau local pour alimenter les équipements domestiques limitent la quantité d'équipements électroniques personnels pouvant être utilisés par les passagers alors que le nombre et la diversification de tels équipements (smartphones, tablettes, caméras, ordinateurs portables, casques de réalité virtuelle, etc.) augmentent considérablement.

En outre, cette multiplication de convertisseurs spécifiques et locaux à partir des réseaux de distribution primaires et secondaires pose le problème du respect des critères de qualité - en termes de taux de distorsion harmonique, de niveau de fréquence des tensions alternatives, de variation de niveau de tension, de facteur de puissance, etc. - des réseaux primaires et secondaires, le risque de pollution augmentant avec le nombre de convertisseurs.

Par ailleurs, les architectures de conversion intégrées au niveau local ne facilitent pas la reconfiguration des cabines passagers qui intervient lors des réinstallations des flottes sans remise en cause des certifications avion.

De plus, les solutions de l'état de la technique sont contraintes, pour redistribuer la puissance électrique dans les réseaux cabine, de convertir en tension et en fréquence la puissance électrique fournie par le réseau de distribution primaire dans le cadre des normes de protection avionique. Or ces normes régissent la sécurité de la distribution de forte puissance pour les équipements de charge élevée (actionneurs du train d'atterrissage, compresseurs de conditionnement d'air, pompes, actionneurs de dégivrage de voilure, etc.) et les conversions font alors intervenir des équipements surdimensionnés de l'électronique de puissance (par exemple des autotransformateurs) pour pouvoir garantir le respect des normes de certification.

### EXPOSÉ DE L'INVENTION

L'invention vise à pallier ces inconvénients, en particulier elle vise à permettre une adaptation à un nombre important d'équipements électroniques grand public tout en respectant les critères de qualité de leur alimentation électrique sans perturber ceux du réseau avionique, ou plus généralement des réseaux primaires, tout en facilitant les reconfigurations d'alimentation lors des réinstallations de cabine.

Pour ce faire, l'invention prévoit d'alimenter les équipements électroniques grand public à partir d'une distribution sur un réseau domestique relié au plus près des génératrices via une conversion adaptée de sorte à ne pas dépendre du dimensionnement de composants intermédiaires (redresseurs, condensateurs, etc.).

A ce titre, la présente invention a pour objet un procédé d'alimentation électrique selon la revendication indépendante 1.

L'application de la présente solution sur les différents types d'avions qui composent une flotte génère, en outre, une simplicité de gestion et de modification de la flotte. Avantageusement, la cabine passagers intègre alors un réseau qui présente une capacité naturelle à accueillir tout type d'équipements amenés par les passagers. De plus, les enjeux d'obsolescence liés à une puissance électrique non maîtrisée sont supprimés.

Les modes particuliers de réalisation du procédé selon la revendication 1 sont définis par les revendications dépendantes 2 à 6.

L'invention se rapporte également à une architecture réseau d'alimentation électrique selon la revendication indépendante 7.

Les modes particuliers de réalisation de l'architecture selon la revendication 7 sont définis par les revendications dépendantes 8 à 13.

Dans le présent texte, le terme « domestique » se rapporte aux équipements d'un réseau cabine qui sont non critiques pour la gestion du vol. Les qualificatifs « amont » et « aval » se rapportent au sens de propagation électrique des liaisons de puissance.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, un schéma-blocs fonctionnel d'un mode de réalisation d'architecture réseau d'alimentation d'un réseau domestique embarqué dans une cabine d'aéronef par des réseaux primaires de génération de puissance électrique via des ensembles convertisseurs selon l'invention ;
- la figure 2, un schéma-blocs fonctionnel d'un ensemble convertisseur de l'exemple d'architecture selon la figure 1, et
- la figure 3, un schéma-blocs d'une variante d'architecture de la figure1 avec deux ensembles convertisseurs par réseau primaire.

### DESCRIPTION DÉTAILLÉE

Dans la description ci-dessous, des signes de référence identiques se rapportent à un même élément et renvoient au(x) passage(s) du texte qui le décrive(nt).

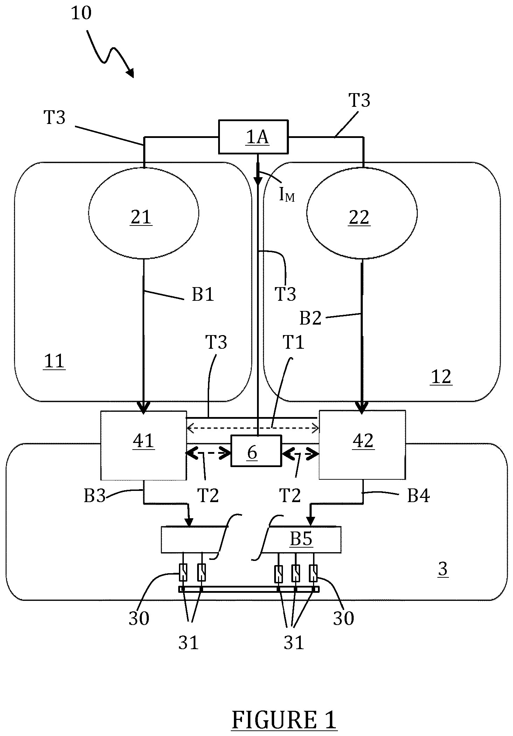

En référence au schéma-blocs d'architecture réseau de la figure 1, l'architecture 10 illustrée comporte deux réseaux primaires 11 et 12 de distribution de puissance électrique, chaque réseau primaire 11, 12 étant alimenté par une génératrice électrique 21, 22 couplée à un moteur de propulsion (non représenté) d'un aéronef bimoteur. Les génératrices fournissent par exemple une puissance avionique sous une tension triphasée de 115 volts à 400 Hz.

Dans cette architecture 10, les réseaux primaires 11, 12 sont connectés en parallèle à un unique réseau domestique de cabine 3, destiné à l'alimentation de prises d'équipements domestiques 31 de la cabine passagers, via des ensembles convertisseurs en tension et en fréquence 41 et 42. Les prises 31 sont protégées par des contacteurs 30.

La liaison entre chaque génératrice 21, 22 et chaque ensemble convertisseur correspondant 41, 42 est assurée par un bus de transmission primaire de courant alternatif triphasé dit « bus primaire » B1, B2. Et les liaisons entre les ensembles convertisseurs 41, 42 et le réseau domestique 3 sont mises en œuvre respectivement par des bus de transmission vers la cabine dit « bus cabine » B3 et B4, connectés en une extrémité aux ensembles convertisseurs 41, 42 et en leur autre extrémité à un bus domestique B5 d'alimentation du réseau domestique de cabine 3.

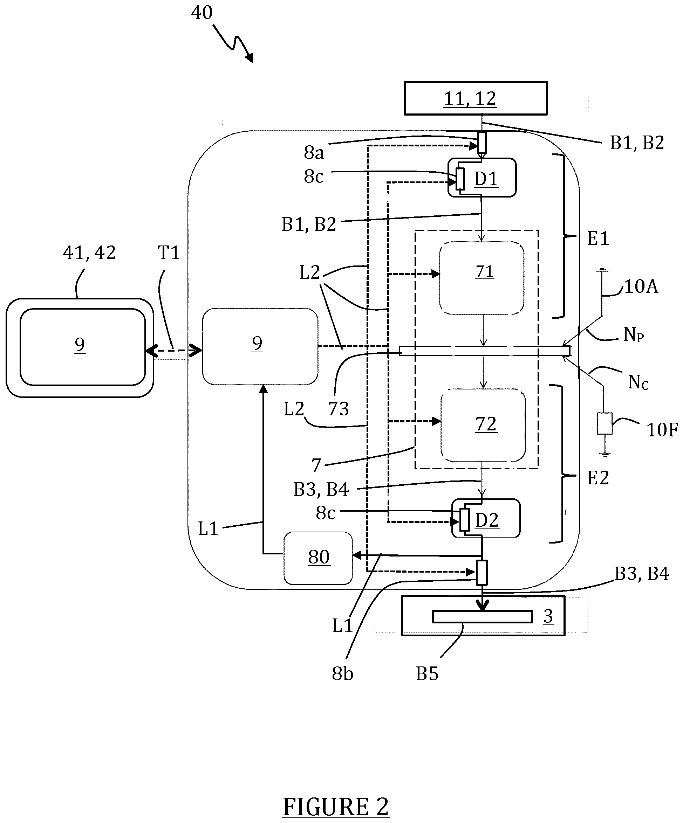

Les ensembles convertisseurs 41, 42 sont ainsi parallélisés pour alimenter directement en parallèle le bus de réseau domestique B5. Le bus domestique B5 alimente ainsi le réseau domestique cabine 3 en courant alternatif de niveau domestique, en courant monophasé de tension 230 volts à 50 Hz dans l'exemple, pour distribuer la puissance électrique aux équipements domestiques de la cabine, des équipements IFE dans cet exemple. Les ensembles convertisseurs 41, 42 sont dimensionnés pour transformer la puissance électrique avionique des réseaux primaires 11, 12 en tension et fréquence domestiques. Un exemple d'ensemble convertisseur est décrit ci-après en référence à la figure 2.

De plus, les ensembles convertisseurs 41 et 42 sont interconnectés par une liaison de transmission de données bidirectionnelles T1, afin de constituer une régulation de partage d'alimentation entre les réseaux primaires 11 et 12 en fonction de la disponibilité de puissance dans les bus de transmission B1 et B2. Une telle régulation répartie dans les ensembles convertisseurs 41, 42 est également décrite en référence à la figure 2. En variante, le partage d'alimentation entre les réseaux primaires 11 et 12 est régulée par une unité centralisée 6 de traitement de données et de commande reliée à chaque ensemble convertisseur 41, 42 par des liaisons de transmission bidirectionnelles T2.

Avantageusement, une consigne de courant d'intensité maximale extractible I_{M} est fournie à chaque ensemble convertisseur 41, 42 à partir des données de puissance électrique disponible captées sur chaque génératrice 21, 22 de puissance électrique primaire. En général, la puissance électrique disponible sur chaque génératrice 21, 22 est fournie par une centrale de gestion avionique 1A qui gère toutes les données de vol et évalue la valeur de la consigne I_{M}.

La consigne I_{M} est alors transmise via des liaisons T3 à chaque ensemble convertisseur 41, 42, ou à l'unité 6 dans le cas d'un traitement des données et d'une commande de régulation centralisés. La transmission d'une consigne de courant maximal est particulièrement utile dans le cas où l'aéronef fonctionne en mode dégradé.

En référence au schéma-blocs fonctionnel de la figure 2, un ensemble convertisseur 40, qui représente l'un ou l'autre des ensembles convertisseurs 41 et 42 de l'exemple d'architecture 10 de la figure 1, est illustré en détail. Un ensemble convertisseur 40 comporte deux étages de traitement de puissance, un étage d'entrée amont E1 et un étage de sortie aval E2. Les étages de traitement E1 et E2 intègrent respectivement des dispositifs anti-perturbation D1 et D2 de filtrage, de compensation de niveau et de protection du réseau électrique, en liaison amont avec le réseau primaire 11, 12 via le bus B1, B2 correspondant, et respectivement en liaison aval avec le réseau domestique 3 via le bus B3, B4 correspondant. Les dispositifs D1 et D2 intègrent de manière connue des filtres inductifs et capacitifs, des disjoncteurs, des contacteurs et des correcteurs de facteur de puissance. De tels dispositifs sont destinés à faire respecter les critères de qualité des réseaux amont ou aval: faible taux de distorsion harmonique, maintien du niveau de fréquence ou des tensions, etc.

Les dispositifs anti-perturbation D1 et D2 sont couplés à un ensemble 7 d'adaptateurs en tension et en fréquence 71 et 72 via le bus primaire B1, B2 en amont et le bus cabine B3, B4 en aval. Les adaptateurs 71 et 72 sont intégrés respectivement dans les étages de traitement de puissance amont E1 et aval E2 et sont couplés entre eux par un transformateur d'isolation galvanique 73.

Ce transformateur 73 assure la séparation des lignes de neutres N_{P} et N_{C} et ainsi sépare le régime de neutre avionique 10A du réseau primaire 11,12 du régime de neutre flottant 10F du réseau domestique 3. Cette séparations des neutres des réseaux primaires 11, 12 et du réseau domestique 3 permet une séparation fiable du réseau primaire 11,12 avec le réseau domestique 3, afin qu'un défaut sur le réseau primaire 11,12 n'impacte pas le réseau domestique 3 et inversement. De plus, le transformateur isolant galvanique 73 assure avantageusement une auto-alimentation de l'ensemble convertisseur correspondant 41, 42 qui l'intègre.

Dans le mode de réalisation illustré, l'adaptateur 71 est un modulateur de haute fréquence, dans la gamme 10 kHz à 1 MHz, en liaison aval avec le dispositif anti-perturbation D1, l'adaptateur 72 étant un convertisseur de tension en liaison amont avec le dispositif anti-perturbation D2 et fonctionnant en source de courant pour le réseau domestique de cabine 3. La tension, la fréquence et la phase du convertisseur 72 sont ainsi asservies à la référence de tension du bus domestique B5, 230V/50Hz dans l'exemple de réalisation.

Des capteurs 80 de mesure de tension, d'intensité de courant, fréquence et de facteur de puissance sont agencés en sortie aval de chaque ensemble convertisseur 40, en sortie aval du dispositif anti-perturbation D2 dans le mode de réalisation illustré. Les mesures sont transmises par une liaison L1 de boucle d'asservissement à une unité locale 9 de traitement des données mesurées et de commande de régulation.

Les unités locales 9 de chaque ensemble convertisseur 40 sont interconnectées par la liaison de transmission de données bidirectionnelles T1 pour constituer une régulation décentralisée du partage des sources de puissance entre les réseaux primaires 11, 12 en fonction de leur disponibilité. L'unité locale 9 pilote l'ouverture / fermeture des contacteurs 8a, 8b agencés en amont et en aval de chaque ensemble convertisseur 40, des disjoncteurs 8c des dispositifs anti-perturbation D1 et D2, ainsi que les adaptateurs en tension et fréquence 71,72. La liaison de transmission de données L1 forme des boucles d'asservissement avec les liaisons de commande L2 - de l'unité locale 9 avec les contacteurs 8a, 8b, les disjoncteurs 8c et les adaptateurs de tension et fréquence 71, 72 - et les liaisons de puissance constituées par les bus B1, B2, et B3, B4.

En variante, les unités locales 9 peuvent se fondre en une unité centralisée de traitement de données et de commande, comme l'unité centralisée 6 de la figure 1, qui pilote alors les contacteurs 8a, 8b et les disjoncteurs 8c. Alternativement, chaque unité locale 9 de traitement de données et de commande de régulation réalise, en liaison avec les capteurs de mesure 80 de l'ensemble convertisseur correspondant 40, une gestion locale indépendante.

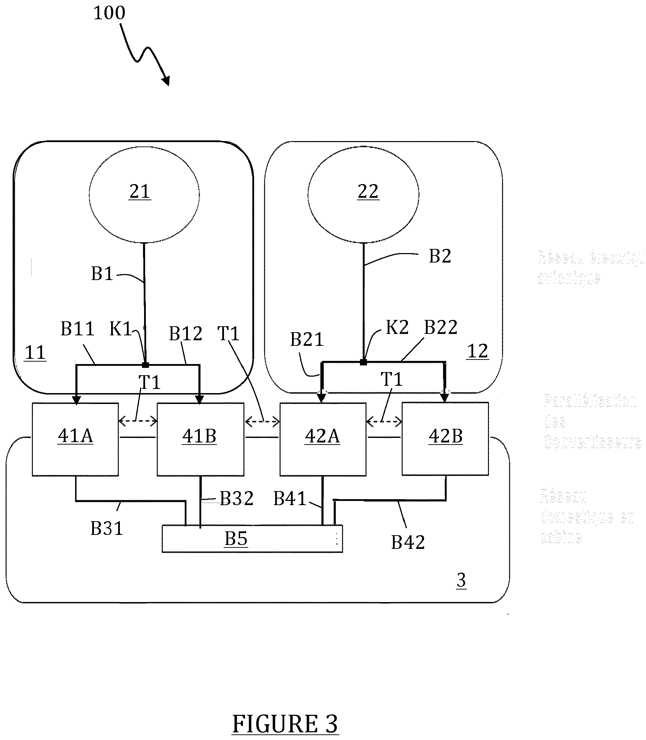

Le schéma-blocs de la figure 3 illustre une variante d'architecture 100 de la figure1 avec deux ensembles convertisseurs 41A, 41B et 42A, 42B pour chaque réseau primaire 11, 12. Dans cette architecture 100, qui reprend la structure de base de l'architecture 10, chaque bus primaire B1, B2 est divisé en deux bus secondaires B11, B12 et B21, B22 par des coupleurs de bus, K1 et K2. Les liaisons entre les ensembles convertisseurs 41A, 41B, 42A, 42B et le réseau domestique 3 sont mises en œuvre respectivement par des bus cabine de transmission, respectivement B31, B32, B41 et B42, qui alimentent le bus B5 du réseau domestique cabine 3.

Dans cet exemple de réalisation, chaque ensemble convertisseur 41A, 41B, 42A, 42B est interconnecté à un autre ensemble convertisseur par les liaisons de transmission de données bidirectionnelles T1. A partir des données partagées via les liaisons T1, la régulation de partage d'alimentation entre les réseaux primaires 11 et 12, en fonction de leur disponibilité de puissance, est répartie dans les ensembles convertisseurs 41A, 41B et 42A, 42B de manière semblable à la régulation répartie de l'architecture 10 en référence à la figure 1. En variante, le partage d'alimentation entre les réseaux primaires 11 et 12 est régulé par une unité centralisée ou alternativement par des unités locales, comme décrit ci-dessus en référence à la figure 2.

L'invention n'est pas limitée aux exemples décrits et représentés. Ainsi, des sources auxiliaires de courant électrique peuvent être montées en parallèle avec les ensembles convertisseurs considérés également comme des sources de courant, en particulier des piles à combustible, des capteurs solaires, des batteries, afin de fournir de la puissance au réseau domestique en fonction de la disponibilité des sources primaires.

De plus, en opérationnel cette architecture permet d'avoir une fonction de continuité de service en puissance dans la cabine lors d'une reconfiguration du réseau avion (par exemple lors de la perte d'une génératrice) grâce à la parallélisation des ensembles convertisseurs qui permet d'alimenter un unique réseau domestique alimenté de manière indifférenciée par les génératrices. Les reconfigurations du réseau peuvent être liées à la phase d'utilisation de l'appareil (au sol, décollage, vol, atterrissage) ou à des facteurs intrinsèques du réseau qui peuvent se produire pendant le vol. Différents cas de panne étant anticipés dans les moyens de traitement de données du régulateur (défaut important sur le réseau primaire, perte de la commande d'un convertisseur, etc.), ces moyens de traitement commandent l'ouverture des contacteurs appropriés en fonction de la situation détectée considérée comme une panne.

Par ailleurs, le découplage entre les charges des systèmes avions, qui sont liées à la certification, et celles liées aux fonctions de la cabine n'est réalisé qu'une fois par type d'avion.

Concernant le transformateur d'isolation galvanique, ce dernier peut aussi avoir un rôle de transformation du niveau de tension.

Concernant les dispositifs anti-perturbation, les moyens de compensation peuvent comporter des moyens de délestage automatique de charges en cas de chute de tension.

Par ailleurs, l'alimentation des charges domestiques peut résulter de conversions de tension alternative ou continue à partir de bus correspondantes ou de la combinaison des deux conversions comme décrite ci-dessus.

Avantageusement, l'aéronef possédant deux niveaux de tensions disponibles en alternatif (par exemple 115V à 400Hz) et en continu (par exemple 28V), il est possible d'obtenir un courant domestique alternatif, par exemple 230V à 50Hz, soit à partir de la tension alternative comme dans la présente invention soit à partir de la tension continue par un onduleur de conversion DC/AC.

Concernant les capteurs de mesure, ils peuvent être situés en sortie des ensembles convertisseurs, ou en extrémité du réseau domestique afin de prendre en compte les chutes de tension. En cas d'autorégulation indépendante par chaque ensemble convertisseur, les capteurs se situent à proximité de chacun de ces ensembles.

## Revendications

1. Procédé d'alimentation électrique d'un réseau domestique (3), embarqué dans une cabine de passagers utilisant des équipements dits domestiques nécessitant des niveaux de tension de type domestique terrestre, **caractérisé en ce que**, des sources de puissance électrique primaire (21, 22) étant fournies sur au moins deux réseaux primaires (11,12), le procédé consiste à:
- connecter parallèlement les réseaux primaires (11, 12) à un unique réseau domestique embarqué (3) d'alimentation desdits équipements domestiques dans la cabine à travers des interfaces de conversion (41, 42; 40) de courant alternatif primaire en tension et en fréquence de niveau domestique, chaque réseau primaire (11, 12) étant couplé au réseau domestique (3) à travers au moins une interface (41, 42; 40);
- paralléliser les interfaces de conversion (41, 42; 40) par une mesure (80) des données de niveau des paramètres électriques fournies (L1) par chaque interface (41, 42; 40) pour réguler (L1, L2) le partage des sources de puissance primaires (21, 22) en fonction de leur disponibilité et fournir une continuité de niveau de service sur le réseau domestique (3) par au moins une unité de traitement des données mesurées et de commande de régulation (9, 6) en boucle d'asservissement (L1, L2) et transmission bidirectionnelle (T1; T2) desdites données; et
- maintenir les critères de qualité de chaque réseau primaire et de qualité domestique du réseau domestique par filtrage, compensation de niveau et correction de facteur de puissance (D1, D2) dans chaque interface de conversion (41, 42; 40) en liaison amont avec chaque réseau primaire (11, 12) et en liaison aval avec le réseau domestique (3), chaque interface de conversion (41, 42; 40) comportant deux étages fonctionnels (E1, E2), respectivement en amont et aval d'une transformation électrique d'isolation galvanique (73), et chaque étage fonctionnel (E1, E2) comportant deux niveaux d'adaptation, un niveau (D1, D2) dédié au maintien des critères de qualité en liaison respectivement avec le réseau primaire et le réseau domestique, et un niveau (7; 71, 72) de conversion en tension et/ou en fréquence en liaison avec l'isolation galvanique (73).

2. Procédé d'alimentation électrique selon la revendication 1, dans lequel la transformation électrique d'isolation galvanique (73) réalise une séparation du régime de neutre avionique (10A) du réseau primaire correspondant (11, 12) et du régime de neutre (10F) du réseau domestique (3).

3. Procédé d'alimentation électrique selon l'une quelconque des revendications précédentes, dans lequel une consigne de courant d'intensité maximale extractible (I_{M}) est fournie à chaque interface de conversion (41, 42; 40) à partir des données de puissance électrique disponible sur chaque source de puissance électrique primaire (21, 22).

4. Procédé d'alimentation électrique selon l'une quelconque des revendications précédentes, dans lequel les données de niveau des paramètres électriques fournies par chaque interface de conversion (41, 42; 40) sont partagées (T1) entre les interfaces de conversion (41, 42; 40) par des liaisons bidirectionnelles entre des unités de traitement des données et de commande de régulation (9) intégrées dans chaque interface de conversion (41, 42. 40), ce partage régulant l'apport de chaque source de puissance (21, 22) au niveau de chaque interface (41, 42; 40) en fonction de sa disponibilité.

5. Procédé d'alimentation électrique selon l'une quelconque des revendications 1 à 3, dans lequel les données de niveau des paramètres électriques fournies par chaque interface de conversion (41, 42; 40) sont centralisées dans une unité de traitement des données et de commande de régulation (6) par transmission bidirectionnelle desdites données pour réguler le partage des sources de puissance (21, 22) pour une continuité et une constance de niveau de service sur le réseau domestique embarqué (3).

6. Procédé d'alimentation électrique selon l'une quelconque des revendications précédentes, dans lequel au moins une alimentation électrique auxiliaire est utilisée pour fournir de la puissance électrique au réseau domestique embarqué (3) en fonction de la disponibilité de la puissance électrique des réseaux primaires (11, 12).

7. Architecture réseau d'alimentation électrique (10, 100) d'une cabine de véhicule utilisant des équipements dits domestiques nécessitant des niveaux de tension de type domestique terrestre, dans laquelle au moins deux réseaux primaires (11, 12) de distribution de puissance électrique sont alimentés chacun par une génératrice électrique (21, 22), **caractérisée en ce que** les réseaux primaires (11, 12) sont connectés en parallèle à un unique réseau domestique cabine (3) d'alimentation desdits équipements domestiques via des ensembles convertisseurs (41, 42; 40) avec au moins un ensemble convertisseur (41, 42; 40) par réseau primaire (11, 12), **en ce que** des capteurs (80) de mesure de tension, intensité de courant, fréquence et de facteur de puissance sont agencés en sortie de chaque ensemble convertisseur (41, 42; 40) et les mesures sont transmises dans une boucle d'asservissement (L1, L2) à au moins un moyen régulateur (6; 9) de partage d'alimentation du réseau domestique (3) en fonction de la puissance disponible dans chaque réseau primaire (11, 12) par transmission bidirectionnelle des données mesurées (T1, L1, L2 ; T2, L1, L2) , **en ce que** chaque ensemble convertisseur (41, 42; 40) comporte un étage de traitement de puissance amont (E1) et un étage de traitement de puissance aval (E2), intégrant chacun un dispositif anti-perturbation (D1, D2) de filtrage, compensation et protection de réseau électrique, respectivement en liaison (B1, B2) avec le réseau primaire correspondant (11, 12) et en liaison (B3, B4) avec le réseau domestique (3), et **en ce que** les dispositifs anti-perturbation (D1, D2) sont couplés à un ensemble (7) d'adaptateurs (71, 72) en tension et fréquence de niveaux domestiques répartis dans les étages de traitement de puissance (E1, E2), chaque ensemble convertisseur comportant, dans l'étage de traitement amont (E1), un modulateur de fréquence (71) en liaison aval avec le dispositif anti-perturbation (D1) via un bus primaire (B1, B2) de transmission de puissance et, dans l'étage de traitement aval (E2), un convertisseur de tension (72) en liaison amont avec le dispositif anti-perturbation (D2) via un bus cabine (B3, B4) de transmission de puissance, cet ensemble d'adaptateurs (7) intégrant également un séparateur (73) de lignes de neutres entre les réseaux primaires (11, 12) et le réseau domestique (3).

8. Architecture réseau selon la revendication précédente, dans laquelle un transformateur isolant galvanique (73) couple les adaptateurs en tension et fréquence (71, 72) et sert de séparateur entre des lignes de neutres (N_{P}, N_{C}) du bus primaire (B1, B2) d'une part et du bus cabine (B3, B4) d'autre part, les lignes neutres (N_{P}, N_{C}) étant connectées respectivement à un régime de neutre avionique (10A) du réseau primaire (11, 12) et à un régime de neutre flottant (10F) du réseau domestique (3).

9. Architecture réseau selon l'une quelconque des revendications 7 ou 8, dans laquelle le moyen régulateur (6; 9) de partage d'alimentation du réseau domestique (3) est choisi entre:
- une interconnexion bidirectionnelle (T1, L1, L2) entre des unités locales (9) de traitement de données et de commande de régulation, intégrées dans chaque ensemble convertisseur (41, 42; 40) et reliées dans la boucle d'asservissement (L1, L2) aux capteurs de mesure et aux bus de transmission de puissance (B1, B2; B3, B4) de cet ensemble convertisseur (41, 42; 40); et
- une unité centralisée (6) de traitement de données et de commande de régulation connectée (T2, L1, L2) aux capteurs de mesure (80) de tous les ensembles convertisseurs (41, 42; 40).

10. Architecture réseau selon l'une quelconque des revendications 7 à 9, dans laquelle chaque dispositif anti-perturbation (D1, D2) comporte des filtres de type inductif et/ou capacitif et au moins un correcteur de facteur de puissance.

11. Architecture réseau selon l'une quelconque des revendications 7 à 10, dans laquelle le moyen régulateur (T1, 9; 6; 9) pilote des contacteurs (8a, 8b) distribués en amont et en aval de chaque ensemble convertisseur (41, 42; 40) sur les bus correspondants (B1, B2; B3, B4), ainsi que des disjoncteurs (8c) des dispositifs anti-perturbation (D1, D2) de chaque ensemble convertisseur (41, 42; 40).

12. Architecture réseau selon l'une quelconque des revendications 7 à 11 dans laquelle, dans l'étage de traitement amont (E1), l'adaptateur (71) est un modulateur de fréquence et dans l'étage de traitement aval (E2), l'adaptateur (72) est un convertisseur de tension.

13. Aéronef équipé d'une architecture réseau selon l'une quelconque des revendications 7 ou 12, dans lequel chaque génératrice électrique (21, 22) est couplée à un moteur de propulsion.

## Patentansprüche

1. Verfahren zur Stromversorgung eines haushaltsüblichen Bordnetzes (3) in einer Passagierkabine, die haushaltsübliche Geräte nutzt, die Spannungspegel vom haushaltsüblichen terrestrischen Typ benötigen, **dadurch gekennzeichnet, dass**, wobei Quellen primärer elektrischer Leistung (21, 22) in mindestens zwei Primärnetzen (11, 12) bereitgestellt sind, das Verfahren darin besteht:
- die Primärnetze (11, 12) parallel an ein einzelnes haushaltsübliches Bordnetz (3) zur Stromversorgung der haushaltsüblichen Geräte in der Kabine durch Schnittstellen zur Umwandlung (41, 42; 40) von primärem Wechselstrom in Spannung und Frequenz haushaltsüblichen Pegels anzuschließen, wobei jedes Primärnetz (11, 12) durch mindestens eine Schnittstelle (41, 42; 40) an das haushaltsübliche Netz (3) gekoppelt ist;
- die Umwandlungsschnittstellen (41, 42; 40) durch eine Messung (80) der Pegeldaten der elektrischen Parameter (L1) zu parallelisieren, die von jeder Schnittstelle (41, 42; 40) bereitgestellt werden, um die Aufteilung der Primärleistungsquellen (21, 22) je nach ihrer Verfügbarkeit zu regulieren (L1, L2) und eine Serviceniveau-Kontinuität im haushaltsüblichen Netz (3) durch mindestens eine Einheit zur Verarbeitung der gemessenen Daten und zur Regulierungssteuerung (9, 6) im Regelkreis (L1, L2) und bidirektionale Übertragung (T1; T2) der Daten bereitzustellen; und
- die Kriterien für die Güte jedes Primärnetzes und haushaltsübliche Güte des haushaltsüblichen Netzes durch Filterung, Pegelausgleich und Leistungsfaktorkorrektur (D1, D2) in jeder Umwandlungsschnittstelle (41, 42; 40) in stromaufwärtiger Verbindung mit jedem Primärnetz (11, 12) und in stromabwärtiger Verbindung mit dem haushaltsüblichen Netz (3) beizubehalten, wobei jede Umwandlungsschnittstelle (41, 42; 40) zwei Funktionsstufen (E1, E2) jeweils stromauf und stromab einer elektrischen Umwandlung mit galvanischer Trennung (73) aufweist, und wobei jede Funktionsstufe (E1, E2) zwei Anpassungspegel, einen Pegel (D1, D2) zur Beibehaltung der Gütekriterien in Verbindung mit dem Primärnetz beziehungsweise dem haushaltsüblichen Netz und einen Spannungs- und/oder Frequenzumwandlungspegel (7; 71, 72) in Verbindung mit der galvanischen Trennung (73) aufweist.

2. Stromversorgungsverfahren nach Anspruch 1, wobei die elektrische Umwandlung mit galvanischer Trennung (73) eine Trennung des Avionik-Neutralleitersystems (10A) des entsprechenden Primärnetzes (11, 12) und des Neutralleitersystems (10F) des haushaltsüblichen Netzes (3) herstellt.

3. Stromversorgungsverfahren nach einem der vorhergehenden Ansprüche, wobei eine Vorgabe für Strom maximaler entnehmbarer Stärke (I_{M}) jeder Umwandlungsschnittstelle (41, 42; 40) ausgehend von Daten elektrischer Leistung bereitgestellt wird, die an jeder Quelle primärer elektrischer Leistung (21, 22) verfügbar ist.

4. Stromversorgungsverfahren nach einem der vorhergehenden Ansprüche, wobei die Pegeldaten der elektrischen Parameter, die von jeder Umwandlungsschnittstelle (41, 42; 40) bereitgestellt werden, zwischen den Umwandlungsschnittstellen (41, 42; 40) durch bidirektionale Verbindungen zwischen den Einheiten zur Verarbeitung der Daten und zur Regulierungssteuerung (9), die in jede Umwandlungsschnittstelle (41, 42; 40) integriert sind, aufgeteilt (T1) werden, wobei diese Aufteilung den Beitrag jeder Leistungsquelle (21, 22) an jeder Schnittstelle (41, 42; 40) je nach ihrer Verfügbarkeit reguliert.

5. Stromversorgungsverfahren nach einem der Ansprüche 1 bis 3, wobei die Pegeldaten der elektrischen Parameter, die von jeder Umwandlungsschnittstelle (41, 42; 40) bereitgestellt werden, in einer Einheit zur Verarbeitung der Daten und zur Regulierungssteuerung (6) durch bidirektionale Übertragung der Daten zur Regulierung der Aufteilung der Leistungsquellen (21, 22) für eine Serviceniveau-Kontinuität und -Konstanz im haushaltsüblichen Bordnetz (3) zentralisiert sind.

6. Stromversorgungsverfahren nach einem der vorhergehenden Ansprüche, wobei mindestens eine Nebenstromversorgung dafür genutzt wird, dem haushaltsüblichen Bordnetz (3) je nach der Verfügbarkeit der elektrischen Leistung der Primärnetze (11, 12) elektrische Leistung bereitzustellen.

7. Stromversorgungsnetz-Architektur (10, 100) einer Fahrzeugkabine, die haushaltsübliche Geräte nutzt, die Spannungspegel vom haushaltsüblichen terrestrischen Typ benötigen, wobei mindestens zwei Primärnetze (11, 12) zur Verteilung elektrischer Leistung jeweils von einem Stromgenerator (21, 22) gespeist werden, **dadurch gekennzeichnet, dass** die Primärnetze (11, 12) mit einem einzelnen haushaltsüblichen Kabinennetz (3) zur Versorgung der haushaltsüblichen Geräte über Wandleranordnungen (41, 42; 40) mit mindestens einer Wandleranordnung (41, 42; 40) durch das Primärnetz (11, 12) parallel geschaltet sind, dadurch, dass die Sensoren (80) zur Messung von Spannung, Stromstärke, Frequenz und Leistungsfaktor am Ausgang jeder Wandleranordnung (41, 42; 40) angeordnet sind und die Messungen in einem Regelkreis (L1, L2) an mindestens ein Mittel zur Regulierung (6; 9) der Aufteilung von Stromversorgung des haushaltsüblichen Netzes (3) je nach der Leistung, die in jedem Primärnetz (11, 12) verfügbar ist, durch bidirektionale Übertragung der gemessenen Daten (T1, L1, L2; T2, L1, L2) übertragen werden, dadurch, dass jede Wandleranordnung (41, 42; 40) eine stromaufwärtige Leistungsverarbeitungsstufe (E1) und eine stromabwärtige Leistungsverarbeitungsstufe (E2) aufweist, die jeweils eine Störungsschutzvorrichtung (D1, D2) zur Filterung, zum Ausgleich und Schutz des Stromnetzes in Verbindung (B1, B2) mit dem entsprechenden Primärnetz (11, 12) und in Verbindung (B3, B4) mit dem haushaltsüblichen Netz (3) enthält, und dadurch, dass die Störungsschutzvorrichtungen (D1, D2) an eine Anordnung (7) von Spannungs- und Frequenzadaptern (71, 72) haushaltsüblicher Pegel gekoppelt sind, die in den Leistungsverarbeitungsstufen (E1, E2) verteilt sind, wobei jede Wandleranordnung in der stromaufwärtigen Verarbeitungsstufe (E1) einen Frequenzmodulator (71) in stromabwärtiger Verbindung mit der Störungsschutzvorrichtung (D1) über einen Primärbus (B1, B2) zur Leistungsübertragung und in der stromabwärtigen Verarbeitungsstufe (E2) einen Spannungswandler (72) in stromaufwärtiger Verbindung mit der Störungsschutzvorrichtung (D2) über einen Kabinenbus (B3, B4) zur Leistungsübertragung aufweist, wobei diese Adapteranordnung (7) ebenfalls einen Neutralleitertrenner (73) zwischen den Primärnetzen (11, 12) und dem haushaltsüblichen Netz (3) enthält.

8. Netzarchitektur nach dem vorhergehenden Anspruch, wobei ein Transformator mit galvanischer Trennung (73) die Spannungs- und Frequenzadapter (71, 72) koppelt und als Trenner zwischen den Neutralleitern (N_{P}, N_{C}) des Primärbusses (B1, B2) einerseits und des Kabinenbusses (B3, B4) andererseits dient, wobei die Neutralleiter (N_{P}, N_{C}) jeweils an ein Avionik-Neutralleitersystem (10A) des Primärnetzes (11, 12) und an ein schwebendes Neutralleitersystem (10F) des haushaltsüblichen Netzes (3) angeschlossen sind.

9. Netzarchitektur nach einem der Ansprüche 7 oder 8, wobei das Mittel zur Regulierung (6; 9) der Aufteilung von Stromversorgung des haushaltsüblichen Netzes (3) aus Folgendem ausgewählt ist:
- einer bidirektionalen Verbindung (T1, L1, L2) zwischen lokalen Einheiten (9) zur Verarbeitung von Daten und zur Regulierungssteuerung, die in jede Wandleranordnung (41, 42; 40) integriert und im Regelkreis (L1, L2) mit den Messsensoren und den Leistungsübertragungsbussen (B1, B2; B3, B4) dieser Wandleranordnung (41, 42; 40) verbunden sind; und
- einer zentralen Einheit (6) zur Verarbeitung von Daten und zur Regulierungssteuerung (T2, L1, L2), die an die Messsensoren (80) aller Wandleranordnungen (41, 42; 40) angeschlossen ist.

10. Netzarchitektur nach einem der Ansprüche 7 bis 9, wobei jede Störungsschutzvorrichtung (D1, D2) induktive und/oder kapazitive Filter und mindestens einen Leistungsfaktorkorrektor aufweist.

11. Netzarchitektur nach einem der Ansprüche 7 bis 10, wobei das Regulierungsmittel (T1, 9; 6; 9) Schütze (8a, 8b), die stromauf und stromab jeder Wandleranordnung (41, 42; 40) auf den entsprechenden Bussen (B1, B2; B3, B4) verteilt sind, sowie Schutzschalter (8c) der Störungsschutzvorrichtungen (D1, D2) jeder Wandleranordnung (41, 42; 40) ansteuert.

12. Netzarchitektur nach einem der Ansprüche 7 bis 11, wobei in der stromaufwärtigen Verarbeitungsstufe (E1) der Adapter (71) ein Frequenzmodulator und in der stromabwärtigen Verarbeitungsstufe (E2) der Adapter (72) ein Spannungswandler ist.

13. Luftfahrzeug, das mit einer Netzarchitektur nach einem der Ansprüche 7 oder 12 ausgerüstet ist, wobei jeder Stromgenerator (21, 22) an einen Antriebsmotor gekoppelt ist.

## Claims

1. Electric power supply method for an on-board domestic network (3) in a passenger cabin using equipment referred to as domestic equipment requiring voltage levels of terrestrial domestic type, **characterized in that**, primary electric power sources (21, 22) being provided over at least two primary networks (11, 12), the method consists in:
- connecting the primary networks (11, 12) in parallel to a single on-board domestic network (3) for supplying said domestic equipment in the cabin with power through conversion interfaces (41, 42; 40) for converting primary alternating current to domestic-level voltage and frequency, each primary network (11, 12) being coupled to the domestic network (3) through at least one interface (41, 42; 40);
- parallelizing the conversion interfaces (41, 42; 40) by measuring (80) data on the level of the electric parameters provided (L1) by each interface (41, 42; 40) in order to regulate (L1, L2) the sharing of the primary power sources (21, 22) depending on their availability and provide continuity of level of service over the domestic network (3) by means of at least one unit (9, 6) for processing the measured data and for controlling regulation in a control loop (L1, L2) and bidirectional transmission (T1; T2) of said data; and
- maintaining the quality criteria of each primary network and domestic quality criteria of the domestic network by means of filtering, level balancing and power-factor correction (D1, D2) in each conversion interface (41, 42; 40) connected upstream with each primary network (11, 12) and connected downstream with the domestic network (3), each conversion interface (41, 42; 40) comprising two functional stages (E1, E2), upstream and downstream of a galvanic isolation electric transformation (73), respectively, and each functional stage (E1, E2) comprising two adaptation levels, a level (D1, D2) dedicated to maintaining the quality criteria connected with the primary network and the domestic network, respectively, and a level (7; 71, 72) for voltage and/or frequency conversion connected with the galvanic isolation (73).

2. Electric power supply method according to Claim 1, wherein the galvanic isolation electric transformation (73) splits the avionic neutral point (10A) of the corresponding primary network (11, 12) and the neutral point (10F) of the domestic network (3).

3. Electric power supply method according to either one of the preceding claims, wherein a maximum extractable current setpoint (I_{M}) is provided to each conversion interface (41, 42; 40) on the basis of data on the electric power available from each primary electric power source (21, 22).

4. Electric power supply method according to any one of the preceding claims, wherein the data on the level of the electric parameters provided by each conversion interface (41, 42; 40) are shared (T1) between the conversion interfaces (41, 42; 40) by means of bidirectional connections between units (9) for processing the data and for controlling regulation which are incorporated into each conversion interface (41, 42; 40), this sharing regulating the contribution of each power source (21, 22) to each interface (41, 42; 40) depending on its availability.

5. Electric power supply method according to any one of Claims 1 to 3, wherein the data on the level of the electric parameters provided by each conversion interface (41, 42; 40) are centralized in a unit (6) for processing the data and for controlling regulation, by means of bidirectional transmission of said data, in order to regulate the sharing of the power sources (21, 22) to achieve continuity and constancy of level of service over the on-board domestic network (3).

6. Electric power supply method according to any one of the preceding claims, wherein at least one auxiliary electric power supply is used to provide electric power to the on-board domestic network (3) depending on the availability of the electric power of the primary networks (11, 12).

7. Electric power supply network architecture (10, 100) of a vehicle cabin using equipment referred to as domestic equipment requiring voltage levels of terrestrial domestic type, in which at least two primary electric power distribution networks (11, 12) are each supplied with power by an electric generator (21, 22), **characterized in that** the primary networks (11, 12) are connected in parallel to a single cabin domestic network (3) for supplying said domestic equipment with power via converter units (41, 42; 40), with at least one converter unit (41, 42; 40) per primary network (11, 12), **in that** voltage, current, frequency and power-factor measurement sensors (80) are arranged at the output of each converter unit (41, 42; 40) and the measurements are transmitted in a control loop (L1, L2) to at least one regulating means (6; 9) for regulating the sharing of the power supply of the domestic network (3) depending on the power available in each primary network (11, 12) by means of bidirectional transmission of the measured data (T1, L1, L2; T2, L1, L2), **in that** each converter unit (41, 42; 40) comprises an upstream power-processing stage (E1) and a downstream power-processing stage (E2), each incorporating an anti-disturbance device (D1, D2) for filtering, balancing and protecting an electric network, connected (B1, B2) with the corresponding primary network (11, 12) and connected (B3, B4) with the domestic network (3), respectively, and **in that** the anti-disturbance devices (D1, D2) are coupled to a set (7) of domestic-level voltage and frequency adaptors (71, 72) distributed in the power-processing stages (E1, E2), each converter unit comprising, in the upstream processing stage (E1), a frequency modulator (71) connected downstream with the anti-disturbance device (D1) via a primary power transmission bus (B1, B2) and, in the downstream processing stage (E2), a voltage converter (72) connected upstream with the anti-disturbance device (D2) via a cabin power transmission bus (B3, B4), this adaptor set (7) also incorporating a splitter (73) of neutral lines between the primary networks (11, 12) and the domestic network (3).

8. Network architecture according to the preceding claim, wherein a galvanic isolating transformer (73) couples the voltage and frequency adaptors (71, 72) and serves as a splitter between neutral lines (N_{P}, N_{C}) of the primary bus (B1, B2) on one hand and of the cabin bus (B3, B4) on the other hand, the neutral lines (N_{P}, N_{C}) being connected to an avionic neutral point (10A) of the primary network (11, 12) and to a neutral floating point (10F) of the domestic network (3), respectively.

9. Network architecture according to either one of Claims 7 and 8, wherein the regulating means (6; 9) for regulating the sharing of the power supply of the domestic network (3) is chosen from:
- a bidirectional interconnection (T1, L1, L2) between local units (9) for processing data and controlling regulation which are incorporated into each converter unit (41, 42; 40) and connected in the control loop (L1, L2) to the measurement sensors and to the power transmission buses (B1, B2; B3, B4) of this converter unit (41, 42; 40); and
- a centralized unit (6) for processing data and controlling regulation which is connected (T2, L1, L2) to the measurement sensors (80) of all the converter units (41, 42; 40).

10. Network architecture according to any one of Claims 7 to 9, wherein each anti-disturbance device (D1, D2) comprises filters of inductive and/or capacitive type and at least one power-factor corrector.

11. Network architecture according to any one of Claims 7 to 10, wherein the regulating means (T1, 9; 6; 9) controls contactors (8a, 8b) distributed upstream and downstream of each converter unit (41, 42; 40) over the corresponding buses (B1, B2; B3, B4), and also circuit breakers (8c) for the anti-disturbance devices (D1, D2) of each converter unit (41, 42; 40).

12. Network architecture according to any one of Claims 7 to 11, wherein, in the upstream processing stage (E1), the adaptor (71) is a frequency modulator and, in the downstream processing stage (E2), the adaptor (72) is a voltage converter.

13. Aircraft equipped with a network architecture according to either one of Claims 7 and 12, wherein each electric generator (21, 22) is coupled to a propulsion engine.
